(19) Europäisches Patentamt
European Patent Office
Office européen des brevets

(11) EP 1 744 185 A1

(12) EUROPEAN PATENT APPLICATION

(43) Date of publication:
17.01.2007 Bulletin 2007/03

(51) Int Cl.:
$G01W 1/10$ (2006.01)

(21) Application number: 05425508.8

(22) Date of filing: 13.07.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: CIMA-Università degli Studi di Genova
16100 Genova (IT)

(72) Inventors:
• Ferraris, Luca
17020 Calice Ligure
Savona (IT)
• Rebora, Nicola
16162 Genova (IT)
• Graf von Hardenberg, Jost Diedrich
13100 Vercelli (IT)

(74) Representative: Deambrogi, Edgardo et al
Jacobacci & Partners S.p.A.
Corso Emilia, 8
10152 Torino (IT)

(54) **Method for estimating a variable geophysical field particularly for forecasting atmospheric precipitation**

(57)     What is described is a procedure for estimating a variable geophysical field, such as, in particular, a meteorological rainfall field, in a predetermined geographic region. On the basis of a set of data ($P(X,Y,T)$) indicating the values taken by the field in the region in a predetermined time interval, having specified space and time resolutions, a synthetic stochastic field ($r(x,y,t)$) was determined, with finer space and time resolutions, by downscaling the acquired data. The downscaling operation includes the reconstruction of the power spectrum of the field according to a predetermined quadratic functional expression approximating the power spectrum ($|\hat{P}(K_X, K_Y, \Omega)|^2$) of the data acquired at the resolved space and time scales, the extrapolation of the reconstructed spectrum to the smaller target scales ($|\hat{P}(k_x, k_y, \omega)|^2$) and the generation of random phases of the field ($\phi(k_x, k_y, \omega)$).

An ensemble of realizations of the rainfall field determined in this way can be used for analysing the evolution of hydrological phenomena, and in particular for estimating the risk of a flood event in a predetermined geographical region.

Acquisition of $P(X,Y,T)$ — 100

$\hat{P}(K_X, K_Y, \Omega) = \Im\{P(X,Y,T)\} = |\hat{P}|^2 \exp i\Phi$ — 200

generation of ensemble
$\hat{g}(k_x, k_y, \omega) = |\hat{P}(k_x, k_y, \omega)|^2 \exp(i\phi)$ — 300

$g(x,y,t) = \Im^{-1}\{\hat{g}(k_x, k_y, \omega)\}$ — 400

$\tilde{r}(x,y,t) = \gamma[g(x,y,t)]$ — 500

$r(x,y,t) = \tilde{r}(x,y,t)\dfrac{P(X,Y,T)}{\tilde{R}(X,Y,T)}$ — 600

**FIG. 1**

Printed by Jouve, 75001 PARIS (FR)

**Description**

The present invention relates to the estimation of the space and time evolution of a variable geophysical field, and particularly to the estimation of the space and time evolution of an atmospheric precipitation field on small space and time scales on the basis of measurement or forecasting data on a large scale.

In geophysics, in the study of the physical phenomena occurring in specific geographical regions, for example those relating to meteorology, hydrometeorology, hydrology and geology, it is commonly necessary to obtain knowledge of a small-scale geophysical field on the basis of a larger-scale measurement or forecast, for example in order to be able to estimate or forecast the evolution of a variable of the field which is of interest in a limited geographical area and/or in a short time.

A knowledge of the field at small space and time scales is an important prerequisite for the recognition of conditions (such as meteorological conditions) on a local scale - for urban areas, valleys or coastal regions, or river basins, for example - and particularly for the recognition of the anomalous conditions affecting densely inhabited areas or those having centres of productive activity.

In particular, the present invention is introduced with reference to the field of meteorology and to the aspects relating to the study of the evolution of meteorological conditions and to the activity of weather forecasting.

Meteorology is the study of the geophysical phenomena occurring in the atmosphere. From a practical point of view, there are various meteorological elements considered in the production of weather forecasts, comprising: temperature, pressure, wind (direction and strength), humidity, precipitation and solar radiation.

Of these elements, precipitation plays an essential part in the analysis and forecasting of the evolution of hydrological phenomena.

The knowledge of the physical and hydraulic characteristics of the watercourses of a given region, combined with a knowledge of the current rainfall fields, makes it possible to draw up a balance between atmospheric inflows and surface runoff, which is essential both for the planning of works for exploiting and regulating water resources and for the management of critical and dangerous situations such as, for example, risks of flooding.

Among the natural disasters which affect both the general public and industrial activities, floods are the most damaging and devastating in terms of human life and economic losses.

There are two possible ways of safeguarding the population from the risk of flooding: by removing urban settlements from areas subject to flooding risks, or by using meteorological and hydrological forecasting systems.

While the first solution is impractical, owing to the prohibitive costs which it would entail, the use of forecasting tools is the best response in terms of safeguarding human life and assets.

However, conventional alarm systems, based on observations of precipitation and river levels, are not always capable of providing reliable forecasts for the implementation of any civil protection measures.

This is because, although the forecasting of floods based on observations of precipitation and rainfall-runoff modelling in large basins is effective because the response times of these basins to precipitation events are of the order of 12-24 hours or more, and are therefore compatible with the response times of the population, the forecasting of floods in small and medium-sized basins (such as mountain valleys and coastal regions at the mouths of rivers subject to torrential flow) requires a reliable knowledge, in a predetermined geographical region and with a certain degree of anticipation, of the quantity of precipitation which will occur, in such a way that this quantity can be used in hydrological models as if it were observational data.

In the past, the analysis and simulation of rainfall fields has led to a fuller knowledge of the statistical properties of small-scale precipitation. Different types of precipitation patterns (for example, stratiform or convective, frontal or due to isolated thunderstorms, etc.) can differ significantly in their statistical properties.

The principal statistical characteristics of intense rainfall fields on spatial scales ranging from 1 to 200 km and on time scales ranging from a few minutes to several hours are as follows:

-     a non-Gaussian distribution of the probability of rainfall intensity;
-     space and time power spectra (known as "red" spectra) increasing with the scale, with an approximate power-law behaviour;
-     an anomalous scaling behaviour (or multifractality), in other words different scaling behaviours of the different statistical moments of the field;
-     intermittence between rain/no-rain periods and areas;
-     presence of intense rain cells with non-Gaussian profiles.

The above summary description makes it clear that there is a need for a predictive modelling of the atmospheric rainfall fields which is reliable on small space and time scales, so that it can be used as an input in the rainfall-runoff models to estimate the maximum rainfall intensity and obtain a satisfactory forecast of the flood risks on a local scale, specifically the recognition of the appearance of alert conditions for possible floods for the purpose of ensuring the safety of resident populations and minimizing losses in productive activities located in the region concerned.

Unfortunately, the use of a procedure based on precipitation forecasts supplied by meteorological models gives rise to two sets of problems which must be resolved in order to obtain an effective and reliable forecast to be used as the basis for a decision to implement evacuation measures in good time to safeguard persons and property from risks of flooding, namely:

- the intrinsic uncertainty of meteorological modelling; and

- the incompatibility between the temporal and spatial scales of meteorology and those of hydrology.

There are effective tools available for resolving the first problem, but as yet there is no satisfactory solution to the second one.

Effective precipitation forecasts are typically obtained by means of limited area meteorological models (LAM), which include both the synoptic conditions found by means of general circulation models (GCM), in which they are embedded, and mesoscale processes acting on a regional scale.

Unfortunately, however, the precipitation estimates obtained by means of LAM models are not reliable on small scales, partly as a result of the incompleteness of the numeric representation of small-scale processes and the limited resolution of the observation network used for the initialization of the model and the acquisition of data. Moreover, non-hydrostatic numeric models show a high sensitivity to the selection of the parameterization schemes and to the numerical resolution in space and time, as demonstrated by E. Adlerman and K. Drogemeier in "The sensitivity of numerically simulated cyclic mesocyclogenesis to variations in model physical and computational parameters", published in Monthly Weather Review, vol. 130, 2002, pp. 2671-2691. In general, the reliability of precipitation forecasts using LAM models becomes poor at spatial scales of several tens of kilometres, even though the nominal resolution of non-hydrostatic LAM models may be less than 5 km.

Consequently, the scales at which a rainfall field is correctly represented by numerical weather forecasts (such as those derived from an LAM model) are markedly greater than those required for forecasting floods in geographically restricted basins, such as the hydrographic basins typical of the Mediterranean area.

A solution to the problem of generating small-scale precipitation estimates, which overcomes the incompatibility between the scales of meteorological and hydrological modelling, is based on the use of stochastic downscaling methods.

By applying downscaling models to the results of LAM meteorological forecasting, it is possible to generate an ensemble of stochastic realizations of a small-scale rainfall field which have statistical properties similar to those measured for rainfall in a given area and/or synoptic situation, and are consistent with the precipitation forecasts provided by larger-scale LAM models in terms of total volume of forecast precipitation. However, there is no possibility of keeping the large-scale positions of the precipitation structures, or, especially, of having a simple and unambiguous link between the characteristics of the large-scale precipitation field and the parameters of the model. Since a rainfall field obtained in this way is the product of a stochastic process, it cannot be considered as a reliable deterministic forecast of the small-scale rainfall, but rather as a realization of a process having predetermined statistical properties. This means that a downscaling procedure does not enable "the" future evolution of the system to be predicted, but rather enables an ensemble of possible realistic evolution to be known.

In an application to forecasting the evolution of hydrological phenomena, it is therefore essential to repeat the downscaling procedure several times and to generate an ensemble of small-scale fields, to be used in the rainfall runoff models for generating a corresponding set of possible responses of the basin concerned. The probability of a flooding event and the associated uncertainty can be estimated from these responses.

In the prior art, various algorithms have been proposed for downscaling a rainfall field. To simplify matters, the different approaches can be grouped into three main families: (i) point processes, based on the random positioning of a given number of rain bands and cells; (ii) autoregressive processes subjected to a static nonlinear transformation, also known as "metagaussian" models; and (iii) fractal cascades. Mixed models have also been developed by combining the above approaches. All the aforementioned classes of models are capable of reproducing many of the statistical properties of precipitation, including the anomalous scaling behaviour.

Unfortunately, from an operational point of view, the reproduction of the statistical properties of a small-scale precipitation is not useful if it cannot be connected simply and directly to the forecast or measured large-scale rainfall fields. In other words, it is insufficient to simulate the statistical properties of small-scale precipitation to estimate a rainfall field correctly, but it would be advantageous to be able to retain the large-scale information provided by a meteorological model. Unfortunately, none of the proposed methods provides a downscaling procedure capable of correctly propagating the large-scale information such as, for example, the second-order correlations and the form of the rainfall probability distribution.

The object of the present invention is therefore to provide a satisfactory solution to the problems described above, in other words to provide a method for estimating a geophysical field in general, and a rainfall field in particular, on small space and time scales by stochastic downscaling of a large-scale field, which can efficiently propagate the known large-scale information.

A further object of the invention is to provide a method for estimating a variable and intermittent rainfall field at space and time scales which are not resolved or not reliably resolved by numeric meteorological forecasting models.

According to the present invention, these objects are achieved by means of a method for estimating a variable geophysical field having the characteristics claimed in Claim 1.

Specific embodiments of the invention are defined in the dependent claims.

A further object of the invention is a system and a computer program for estimating a variable geophysical field, together with a method for estimating the evolution of a hydrological phenomenon, particularly the risk of a flood event in a predetermined geographical region, as claimed.

To summarize, the method proposed by the invention provides an innovative downscaling technique based on the nonlinear filtering of the output of a linear autoregressive process, to obtain a representation of a model of a geophysical field, such as a meteorological precipitation field, by means of an ensemble of stochastic fields having small-scale statistical properties matched to those of a real large-scale field.

In the currently preferred embodiment, the model is designed to downscale the information relating to rainfall fields on a large scale with low space and time resolution.

The fundamental principle of the invention is that of retaining the amplitude and preferably also the phase of the known (measured) or forecast geophysical field, at the space and time scales at which it is known or at which forecasting is considered to be reliable, and reconstructing the spectrum at the smaller scales, thus approximating the overall field with the output of a stochastic process with predetermined scaling of the second-order moments (defined by the form of the power spectrum) and fixed amplitude distribution.

This simplification has also proved to be sufficient to reproduce the behaviour of the higher-order moments.

Advantageously, the method proposed by the invention has a limited number of parameters and these parameters are related simply and directly to the rainfall field resolved by the meteorological model, in such a way as to conserve the reliable large-scale information contained in the forecast of this model. The method produces an ensemble of stochastic rainfall fields by extrapolation of the information available at large scale, and therefore at low resolution, which have small-scale statistical properties fairly similar to those of the real rainfall fields.

In detail, in the currently preferred embodiment in which the geophysical field is a meteorological field, and more particularly a rainfall field, the downscaling procedure includes a Fourier transformation of the rainfall field on large space and time scales to obtain the representation of the field in terms of power spectrum and phase, and the subsequent reconstruction of the signal to the scales of interest in the transformed domain, enabling the information on the positioning of the main rainfall areas and the orographic effects to be maintained.

The reconstruction of the field at small space and time scales is carried out by generating a power spectrum and a phase term, in which at least the power spectrum and preferably also the phase values at the scales considered reliable are retained. The form of the power spectrum at the scales resolved by the meteorological model is reconstructed by a predetermined functional expression which is also maintained at the scales not resolved by the model, and the phase, at least at the unresolved scales, is represented by a random number lying within the range $[0;2\pi)$.

By conserving the power spectrum of the meteorological field at the reliable scales, it is possible to conserve the linear correlation structure of the rainfall field. Thus it is possible to take into account the spatial organization of precipitation structures on a large scale, or at the scale resolved by the limited-area operational models, which changes significantly according to whether the event in question is of the frontal or the convective type.

In physical terms, conserving the phases of the wavenumbers relating to the reliable space and time scales signifies conserving the position in space and time of the large-scale forecast precipitation structures. The latter information is crucial for the downscaling of rainfall fields produced by non-hydrostatic meteorological models which can model the atmospheric dynamics, with explicit allowance for vertical movements.

An operation of anti-transformation of the reconstructed signal in the transformed domain yields a geophysical field in the space and time domain which is linearly correlated with the scale of interest for hydrological applications, typically with a spatial resolution of approximately, 1 km and a temporal resolution of approximately 0.1 hr.

Finally, an operation of nonlinear transformation of the rainfall field thus calculated is provided, in such a way as to provide a field consistent with the initial rainfall field in terms of rainfall mean, variance and number of zeroes. There are various nonlinear transformations which may be suitable for the purpose of reproducing the amplitude distribution of the precipitation, but a transformation of the exponential type is currently preferred for the sake of simplicity of application and estimation of the parameters.

To sum up, the algorithm is particularly versatile, since it can be applied wherever it is necessary to obtain knowledge of a geophysical field at small space and time scales on the basis of a measurement made at a coarser scale. It can be usefully applied, for example, in the field of satellite observations, where it is desirable to know an ensemble of possible realizations of a geophysical field at a fine scale (with a spatial resolution of the order of 1 km and a temporal resolution of the order of ten minutes) on the basis of large-scale measurements (with a spatial resolution of the order of tens of km and a temporal resolution of the order of hours).

In its currently preferred application to the study of rainfall fields, the method proposed by the invention (called the "Rainfall Filtered Autoregressive Model", abbreviated below to "RainFARM") has proved to be an innovative tool by comparison with the known downscaling methods, and can be considered analogous to ensemble prediction systems (EPS) in respect of the quantification of the uncertainty due to the incompatibility between the scales of meteorological and hydrological modelling. In this context, RainFARM is applicable to short-term stochastic forecasting ("nowcasting") of rainfall fields for public protection purposes.

Further characteristics and advantages of the invention will be disclosed more fully in the following detailed description of one embodiment of the invention, provided by way of non-limitative example, with reference to the attached drawings, in which:

Figure 1 is a flow diagram of the method for estimating a geophysical field, proposed by the invention;
Figure 2 is a diagram of variation with time, comparing a real rainfall field with one estimated on the basis of data representing the real field;
Figures 3a and 3b are diagrams of the space and time power spectra of the real rainfall field, and of an ensemble of fields estimated on the basis of data representing the real field, respectively; and
Figures 4a-4c are diagrams of the higher-order statistical moments of the real rainfall field and of an ensemble of fields estimated on the basis of data representing the real field, as a function of the space and time scales.

A computer system for estimating a variable geophysical field, and in particular, in the preferred embodiment, a system for estimating a meteorological precipitation field, advantageously applied to the predictive analysis of the evolution of hydrological phenomena, particularly of the risk of a flood event in a predetermined geographic region, comprises a computing station (a workstation for example), of a known type, having a processing subsystem, a user interface including at least one display device (screen) and an interaction device such as a keyboard and/or a pointing device (mouse), and if necessary a device for connection to a local network (network bus).

An example of a workstation which can be used is a computer with an Intel Pentium 4 processor having a 2.66 GHz CPU, 2 GBytes of RAM, a 200 GByte hard disk and a Linux operating system.

The workstation is set up to run one or more sets of programs stored on disc or accessible via the network, and to display the results on the screen. The sets of programs are processing and calculation programs comprising one or more code modules for implementing the method according to the invention, described in detail above.

The system according to the invention also comprises a memory subsystem, of a known type, which is, for example, connected to the workstation via the network connection or integrated in the workstation, and which is adapted to store data relating to the measurement or forecasting of a large-scale geophysical field, for example data generated previously by LAM models.

The system can also be set up for connection to other peripheral input/output devices, local or remote, or can consist of a distributed processing system, but these solutions claimed here are considered to be well-known in the art and will not be described further here since they are not relevant to the purposes of the application and comprehension of the present invention.

In general, the system in the described configuration or in other equivalent configurations is set up to estimate a variable geophysical field on the basis·of a program or sets of programs implemented for the execution of the method according to the invention, with the aid of data stored in the memory subsystem.

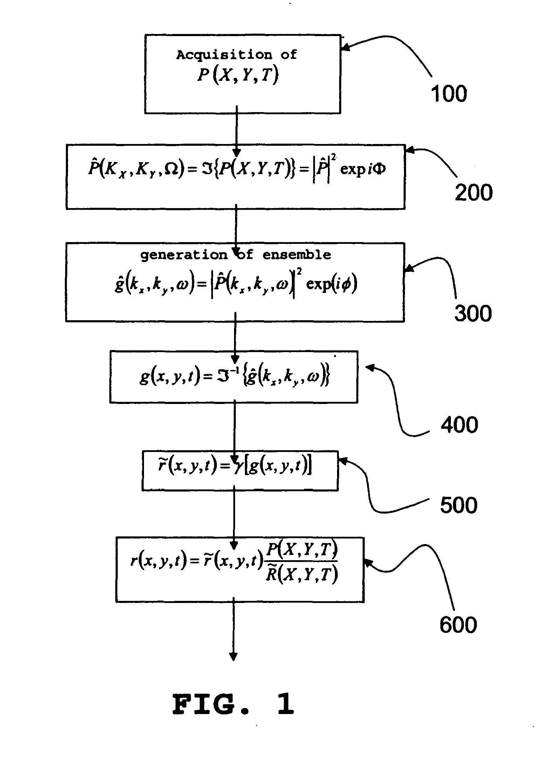

The method for estimating a geophysical field according to the invention is described below with reference to the application for estimating a meteorological precipitation field (the RainFARM algorithm) and is shown in the flow diagram of Figure 1.

It is assumed that a large-scale rainfall field, denoted $P(X, Y, T)$, generated for example by a limited area meteorological model, is known. In the annotation, $X$ and $Y$ are the spatial coordinates and $T$ is time.

The field $P$ is defined over the scale ranges $L_0 \leq (X, Y) \leq L_{max}$ and $T_0 \leq T \leq T_{max}$. The lower extremes $L_0$ and $T_0$ do not necessarily represent the nominal resolution of a LAM model, but rather the scale below which the rainfall forecasts become less reliable (these values can depend, for example, on the resolution of the measurement network used for the acquisition of the data and/or on whether the forecast event is of a stratiform or convective type). The upper spatial and temporal extremes $L_{max}$ and $T_{max}$ are determined by the size and duration of the event.

Upper-case letters are used below to denote quantities defined at scales greater than $L_0$ and $T_0$.

The objective of the method proposed by the invention is to generate by downscaling a stochastic field $r(x, y, t)$ with spatial resolution $\lambda_0 < L_0$ (typically $\lambda_0 \approx 1km$) and time resolution $\tau_0 < T_0$ (typically $\tau_0 \approx 10min$), obtained by extrapolating the statistical properties of the field $P$ to the small scales. The behaviour of the downscaled field $r$ at the scales in the ranges from $L_0$ to $\lambda_0$ and from $T_0$ to $\tau_0$ represents a possible realization of the (unknown) behaviour of the real rainfall field at a small scale.

Lower-case letters are used below to denote quantities defined over the whole scale range, from local and

short-term scales ($\lambda_0,\tau_0$) to regional and long-term scales ($L_{max}$, $T_{max}$). In other words, the variables denoted by lower-case letters are defined over a range which includes the range over which the variables denoted in upper-case are defined.

An important requirement is that, whenever the field $r(x,y,t)$ is aggregated at the space and time scales $L_0$ and $T_0$, an aggregated (or low-resolution) field R is obtained, which can be considered as the product of a low-pass filter applied to the field r, equal or as similar as possible to the original field P.

In operational terms, the method proposed by the invention includes the following steps:

1. Acquisition of measurement data from the large-scale field $P(X,Y,T)$ (step 100).
2. Calculation of the Fourier space-time transformation $\hat{P}(K_X,K_Y,\Omega)$ of the original rainfall field P (step 200), which is used to obtain the space-time power spectrum $|\hat{P}(K_X,K_Y,\Omega)|^2$ and the phase spectrum $\Phi$, such that $\hat{P}(K_X,K_Y,\Omega)$ $=|\hat{P}|^2 \exp i\Phi$.

$K_X$ and $K_Y$ are the wavenumbers in the directions $X$ and $Y$ respectively, and $\Omega$ is the angular frequency for which the relations $(K_X,K_Y)\leq\pi/L_0$ and $\Omega\leq\pi/T_0$ are true, where $\pi/L_0$ is the Nyquist wavenumber and $\pi/T_0$ is the Nyquist frequency of the large-scale field.

3. Extrapolation of the power spectrum $|\hat{P}|^2$ to the small scales (step 300).

To do this, a functional form of the spectrum is assumed, which interpolates the measurement data. Preferably, it is assumed that the power spectrum of the rainfall field has an approximate power-law behaviour at all scales, which is consistent with the result of analysis of the structure of real rainfall fields on the large scale.

The logarithmic slopes in space and time of the power spectrum $|\hat{P}|^2$, respectively denoted as $\alpha$ and $\beta$ below, are estimated from the large-scale field, and are assumed for the sake of simplicity to be isotropic in the two spatial directions.

A Fourier spectrum $\hat{g}(K_x,k_y,\omega)$, with values in the range from $2\pi/L_{max}$ to $\pi/\lambda_0$ as regards wavenumber and from $2\pi/T_{max}$ to $\pi/\tau_0$ as regards frequency, is then generated, and is defined thus:

$$\hat{g}(k_x,k_y,\omega) = \left|\hat{P}(k_x,k_y,\omega)\right|^2 \exp(i\phi)$$

where

- the following functional form is preferably used for the power spectrum:

$$\left|\hat{P}(k_x,k_y,\omega)\right|^2 = \left(k_x^2 + k_y^2\right)^{-\alpha/2} \omega^{-\beta} \quad,$$

and
- random phases $\phi(k_x,k_y,\omega)$, distributed uniformly over the range $[0;2\pi)$, are assumed.

This step serves to generate an ensemble of different realizations of the fields on small scales, corresponding to different choices of the set of random phases.

4. Calculation of the inverse Fourier transformation of the spectrum (step 400), which is used to obtain a Gaussian field $g(x,y,t)$ defined over the whole range of scales.
5. Generation of a complete synthetic rainfall field $\hat{r}(x,y,t)$ (step 500) by means of a nonlinear transformation $\gamma$ of the Gaussian field g, i.e.

$$\tilde{r}(x,y,t) = \gamma[g(x,y,t)] .$$

It should be noted that, in principle, we have no direct information on the form of $\gamma$. A number of experiments have shown that the best results are obtained when the transformation $\gamma$ is assumed to have an exponential form. The preferred embodiment therefore uses the simple exponential transformation

$$\widetilde{r}(x,y,t) = \exp\left[g(x,y,t)\right]$$

which leads to the definition of a log-normal field $\widetilde{r}$.

A more general exponential transformation of the type $\widetilde{r}=\alpha \exp(bg)$ is also possible, although this would require the determination of a larger number of free parameters. However, experimental tests have shown that the gain in terms of precision obtainable by using a greater number of degrees of freedom is minimal, but the necessity of optimizing the new parameters makes the calculation procedure slower and more unwieldy.

6. Normalization of the field synthesized in this way (step 600), by specifying a relation of equality of the said field to the original large-scale field P aggregated at the scales $(L_0, T_0)$, in order to conserve the precipitation volume of the original field.

For this purpose, a low-resolution synthesized field $\widetilde{R}(X,Y,T)$ is defined by aggregating the small-scale field $\widetilde{r}$ at the scale $(L_0, T_0)$ and the ratio $P/\widetilde{R}$ is calculated (provided that $\widetilde{R}\neq0$) in one or more space-time domains with dimensions $(L_0, T_0)$.

Thus we define a new synthetic field

$$r(x,y,t) = \widetilde{r}(x,y,t)\frac{P(X,Y,T)}{\widetilde{R}(X,Y,T)}$$

such that $R=P$, where $R$ is the field $r$ aggregated at the scales $(L_0, T_0)$.

It should be noted that, in computational terms, a "top-hat" aggregation method is preferred, in other words an integration over a plurality of contiguous space-time region domains, but clearly other forms of aggregation can be used.

At space and time scales greater than $L_0$ and To, the low-resolution field r behaves exactly like the original field P. The normalization indirectly implies conservation of the phases at scales greater than or equal to $L_0$ and To. The stochastic nature of the downscaled field r is manifested only at the small scales, and is associated with the choice of the set of random phases in the transformed domain.

This approach is therefore easily used for ensemble predictions: by choosing different sets of random phases in the transformed domain, it is possible to generate a large number of stochastic fields which all correspond to the field P if aggregated at large spatio-temporal scales, and which are different, but with similar statistical properties, at the smaller scales.

Each stochastic field r produced by the method proposed by the invention has a non-Gaussian amplitude distribution which has a form determined by the specific nonlinear transformation chosen, and which shows multifractal behaviour.

Conveniently, the procedure described here has a total of only two free parameters, namely the two spectral slopes in space and time $\alpha$ and $\beta$, determined by the knowledge of the large-scale field, in other words based on the spectral slopes of the field P, without any previous knowledge of the small-scale behaviour of the rainfall field.

Advantageously, because of the conservation of the information on amplitude and possibly also on spectral phase at the large scale, the stochastic field r will show a large-scale precipitation pattern fairly similar to that of the original large-scale field, and will therefore include the orographic effects resolved by the large-scale meteorological model.

On the other hand, the conservation of the large-scale structure is not guaranteed in the currently known scale reduction procedures.

Finally, it should be noted that the spectral slopes of the synthetic field are defined on the basis of the original field P, but are used to generate a Gaussian field $\widetilde{r}$. The form of the spectrum is not invariant, when subject to nonlinear transformations, and therefore, in principle, the slopes can change as a result of the application of an exponential transformation. However, this variation is smaller than the uncertainty associated with the estimation of the said slopes on the basis of the large-scale spectrum portion, and the problem can therefore be disregarded.

In the procedure described above, specific functional forms have been defined for the spectrum and for the nonlinear transformation used at the scales not resolved in the original field. Clearly, other choices are possible, but the functional forms described here are those which are considered to provide the most satisfactory results in the application of the method proposed by the invention to the resolution of a problem of predicting intense rainfall at intermediate latitudes, as will be demonstrated in the remainder of the present description.

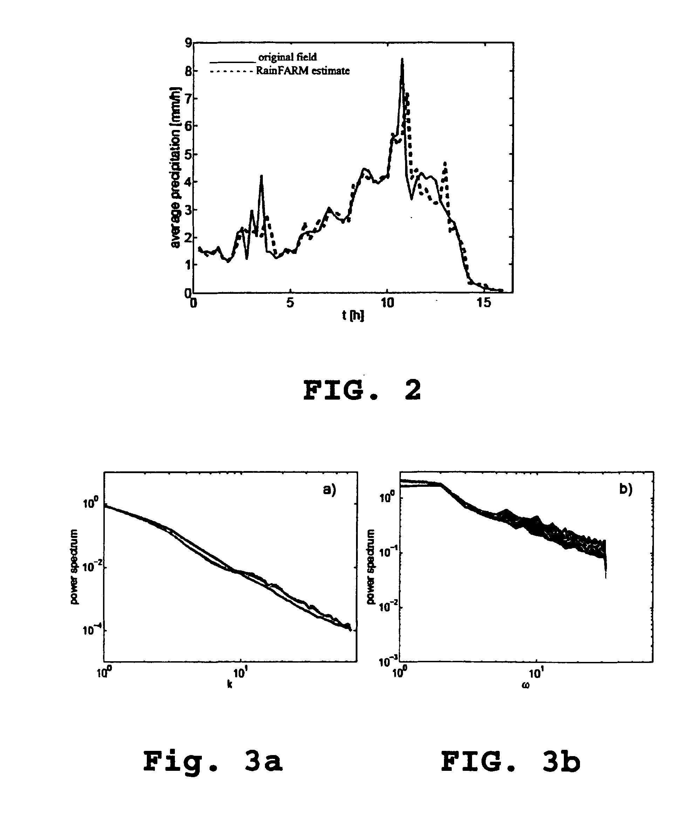

An example of the validation of the method proposed by the invention is discussed below with reference to Figures 2-4.

In order to evaluate the performance of the innovative RainFARM downscaling procedure, we considered a high-resolution rainfall field $p$, artificially degraded to obtain a large-scale field P to be used as the input for the method proposed by the invention.

In the particular case provided by way of example, we considered the rainfall data measured by the C-band meteorological radar at the S. Pietro Capofiume site, Bologna, Italy, for an event which occurred on 25 December 2001, starting at 00:00 UTC with a total duration of 16 hrs and a mean rainfall intensity of 2.5 mm/hr, with peaks of 115 mm/hr, and a sampling interval of 15 mins. This event is a typical example of intense autumn/winter rainfall at intermediate latitude, and includes convective and stratiform contributions.

The duration of the rainfall is therefore $T_{max}$ = 16$h$ and the radar measurements cover a square region with a side length $L_{max}$ = 128$km$, with spatial resolution $\lambda_0$ = 1$km$ and temporal resolution $\tau_0$=15min.

The known rainfall field $p(x,y,t)$ was aggregated to obtain a spatial resolution $L_0$=16$km$ and a temporal resolution $T_0$ = 2$h$ to artificially obtain a large-scale rainfall field $P(X,Y,T)$ to be supplied to the input of the method proposed by the invention.

The downscaled field estimation method was then repeated to generate an ensemble of 100 stochastic small-scale field realizations, whose statistical properties were compared with those of the original field $p$.

Figure 2 shows the variation in time of the instantaneous spatial mean of the original field $p$ (continuous line) and of a realization of the ensemble of stochastic fields r (broken line) synthesized by the method. The excellent agreement between the two fields should be noted.

The space and time power spectra of the original field $p$ (continuous line) and of the ensemble of fields r (mean of the spectra indicated by the broken line) are shown in Figures 3a and 3b. The grey area includes 95% of the calculated spectra.

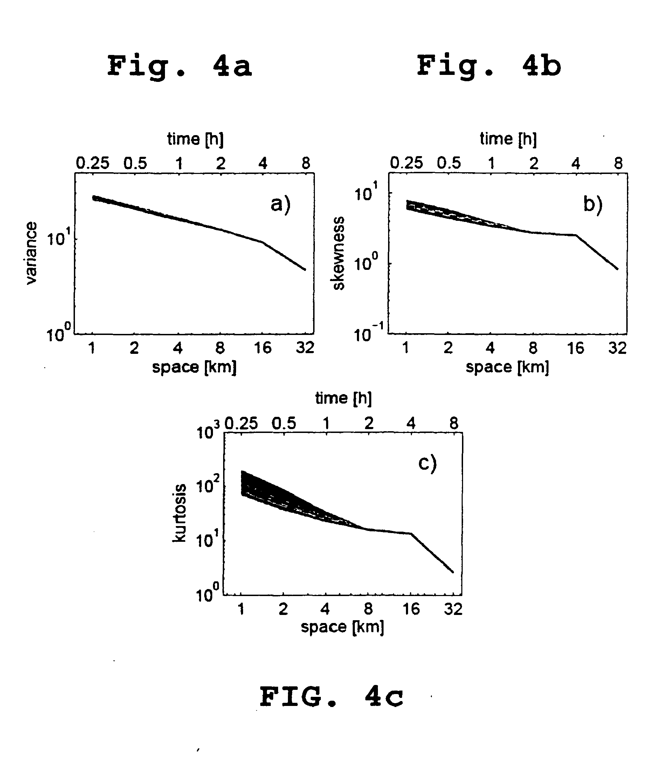

Finally, we determined the extent to which the various moments of the probability point distribution of the original field and of the estimated fields depended on the scale. For this purpose, the fields $p$ and $r$ were aggregated in space and time, on space and time volumes having the dimension $\varepsilon=(\lambda,\tau)$, where $\lambda_0 \leq \lambda \leq L_{max}$ and $\tau_0 \leq \tau \leq T_{max}$, and in particular at the scales (1 km, 0.25 hr), (2 km, 0.5 hr), (4 km, 1 hr), (8 km, 2 hrs), (16 km, 4 hrs) and (32 km, 8 hrs). For each space and time aggregation scale, we calculated statistical moments such as the variance, relative asymmetry (skewness) and kurtosis of the unimodal probability distribution of the precipitation amplitude, without considering the volume, since this was specified as equal. Figures 4a, 4b and 4c show the aforesaid statistical moments as a function of the space and time scales $(\lambda,\tau)$. Again, the excellent agreement between the values should be noted; this indicates that the method proposed by the invention is capable of generating fields with a correct evolution of the higher-order moments.

The most critical aspect is undoubtedly the estimation of the spectral slopes on the basis of the large-scale fields, since an error in this estimation would seriously compromise the performance of the model. Such estimations are more difficult in cases in which the large-scale field is defined over a limited range of scales. In the example under discussion, the large-scale field is defined on scales ranging from $L_0$=16$km$ to $L_{max}$ =128$km$ and from To = 2$h$ to $T_{max}$ = 16$h$, thus enabling a satisfactory estimate of the spectral slopes to be made.

In the practical case, a method for estimating a hydrological phenomenon such as a flood event in a predetermined geographical region includes the application of a known rainfall runoff model to whose input there is supplied an ensemble of rainfall fields obtained by the method proposed by the invention, which downscales the coarse-grained meteorological forecasting data, such as those supplied by a limited area meteorological model (LAM), and is adapted to preserve the large-scale structure of the rainfall event forecast by the meteorological model, in such a way as to generate stochastic fields at a small scale (in other words at scales not resolved by the forecasting model, where "scales not resolved" signifies scales below a scale equal to, for example, four times the nominal numerical resolution of the model) which are consistent with the LAM forecast in terms of rainfall volume and spectral properties.

In an improved embodiment, the method proposed by the invention can be applied to a set of meteorological forecasts generated by LAM models so as to provide an ensemble of stochastic fields for each element of the set of meteorological forecasts.

Clearly, provided that the principle' of the invention is retained, the forms of application and the details of construction can be varied widely from what has been described and illustrated purely by way of non-limitative example and without restrictive intent, without departing from the scope of protection of the present invention as defined by the appended claims.

**Claims**

1. Method for estimating a variable geophysical field representing the space and time evolution of a geophysical quantity in a predetermined geographical region, comprising the operations of:

   - acquiring in a preliminary step (100) a set of data ($P(X,Y,T)$) indicating the values assumed by the said quantity in the aforesaid region in a predetermined time interval, having specified space and time resolutions; and
- determining (200-600) a synthetic field ($r(x,y,t)$) with finer space and time resolutions by downscaling the data acquired to the target space and time scales which are not resolved,

**characterized in that** the said downscaling operation includes:

- the generation (200, 300, 400) of a Gaussian field ($g(x,y,t)$) in the space and time domain on the basis of the said set of acquired data ($P(X,Y,T)$) by means of:

    i) the reconstruction of the power spectrum of the field according to a predetermined functional expression by interpolation of the power spectrum ($|\hat{P}(K_X,K_Y,\Omega)|^2$) of the data acquired at the resolved space and time scales, and extrapolation of the reconstructed spectrum to the target smaller scales ($|\hat{P}(k_x,k_y,\omega)|^2$); and
    ii) the generation of random phases ($\phi(k_x,k_y,\omega)$) of the field;

    - the transformation (500) of the Gaussian field ($g(x,y,t)$) generated according to a predetermined nonlinear transformation function (y); and
    - the normalization (600) of the nonlinearly transformed field ($\tilde{r}(x,y,t)$) in such a way that the normalized synthetic field ($r(x,y,t)$), when aggregated at the resolved scales ($\tilde{R}(X,Y,T)$), takes values which substantially coincide with those of the acquired data ($P(X,Y,T)$),

the synthetic field ($r(x,y,t)$) determined in this way being a realization of a stochastic process.

2. Method according to Claim 1, in which the generation of the Gaussian field ($g(x,y,t)$) is carried out with the conservation of the phases of the data ($P(X, Y, T)$) acquired at the resolved space and time scales, and with the generation of random phases ($\phi(k_x,k_y,\omega)$) at the smaller target scales.

3. Method according to Claim 1 or 2, in which the said functional expression of the power spectrum of the field ($|\hat{P}(k_x, k_y,\omega)|^2$) takes the form:

$$\left|\hat{P}\left(k_x,k_y,\omega\right)\right|^2 = \left(k_x^2 + k_y^2\right)^{-\alpha/2}\omega^{-\beta}$$

4. Method according to any one of the preceding claims, in which the said nonlinear transformation function ($\gamma$) is an exponential transformation function.

5. Method according to any one of the preceding claims, in which the said data acquired in the preliminary step ($P(X, Y,T)$) are measurement data acquired from observation stations distributed over the territory of the said region.

6. Method according to any one of Claims 1 to 4, in which the said data acquired in the preliminary step ($P(X,Y,T)$) are forecast data generated by at least one model for forecasting the field.

7. Method according to any one of the preceding claims, comprising the iteration of the said downscaling operation (200-600) so as to determine an ensemble of stochastic realizations of the synthetic field ($r(x,y,t)$).

8. Method according to any one of the preceding claims, in which the said geophysical field is a meteorological rainfall field.

9. Method according to Claim 8, comprising the acquisition of a plurality of sets of precipitation data ($P(X,Y,T)$) from an ensemble of forecasts generated by a plurality of LAM models.

10. Computer system for estimating a variable geophysical field, programmed to implement a method according to Claims 1 to 9.

11. Computer program or group of programs executable by a computer system, comprising one or more code modules for implementing a method for estimating a variable geophysical field according to Claims 1 to 9.

12. Method for analysing the evolution of hydrological phenomena, particularly for estimating the risk of a flood event in a predetermined geographical region, comprising the operations of:

- acquiring a set of precipitation data representing the precipitation values in the aforesaid region in a predetermined time interval; and
- supplying the said precipitation data to the input of a predetermined hydrological model of runoff of precipitation in a hydrographic basin of the said region,

**characterized in that** the precipitation data supplied to the input of the hydrological model are taken from an ensemble of realizations of a synthetic stochastic rainfall field ($r(x,y,t)$) determined according to the method defined in Claims 1 to 9.

EP 1 744 185 A1

FIG. 1

# FIG. 2

# Fig. 3a          FIG. 3b

Fig. 4a          Fig. 4b

FIG. 4c

**European Patent Office**

# EUROPEAN SEARCH REPORT

Application Number

EP 05 42 5508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REBORA N ET AL:  "RAIN FARM: un modello di disaggegazione della precipitazione prevista da modelli meteorologici ad area limitata"<br>ATTI DEL XXIX CONVEGNO DI IDRAULICA E COSTRUZIONI IDRAULICHE, 7-10 SEPTEMBER 2004, TRENTO, ITALY,<br>7 September 2004 (2004-09-07), pages 313-319, XP008062119<br>ISBN: 88-7740-382-9<br>* the whole document * | 1-12 | INV.<br>G01W1/10 |
| X | REBORA N ET AL:  "Stochastic downscaling of LAM predictions: an example in the Mediterranean area"<br>ADVANCES IN GEOSCIENCES,<br>vol. 2, 30 May 2005 (2005-05-30), pages 181-185, XP002381740<br>European Geosciences Union<br>* the whole document * | 1-12 | |
| L | CIMA CENTRO DI RICERCA INTERUNIVERSITARIO IN MONITORAGGIO AMBIENTALE:  "Activities Report 2004" 2005, XP002381741<br>Retrieved from the Internet:<br>URL:http://www.cima.unige.it/site/activity_reports/Annual%20Report%202004-R.pdf><br>[retrieved on 2006-03-23]<br>* page 7, publications by Rebora et al. * | | TECHNICAL FIELDS SEARCHED (IPC)<br><br>G01W |

The present search report has been drawn up for all claims

| Place of search | Date of completion of the search | Examiner |
|---|---|---|
| Berlin | 19 May 2006 | Domingo Vecchioni, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                           

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. ADLERMAN ; K. DROGEMEIER.** *The sensitivity of numerically simulated cyclic mesocyclogenesis to variations in model physical and computational parameters,* 2002, vol. 130, 2671-2691